# EUROPÄISCHE PATENTSCHRIFT

(11) **EP 3 733 490 B1**
(45) Veröffentlichungstag und Bekanntmachung des Hinweises auf die Patenterteilung: **28.07.2021**
(21) Anmeldenummer: 20172798.9
(22) Anmeldetag: 04.05.2020
(51) Int. Cl.: B62J 7/08

(54) **VERRIEGELUNGSANORDNUNG ZUR VERRIEGELUNG EINES ZUBEHÖRS AN EINEM FAHRRAD**
LOCKING ELEMENT FOR LOCKING AN ACCESSORY TO A BICYCLE
DISPOSITIF DE VERROUILLAGE PERMETTANT DE VERROUILLER UN ACCESSOIRE SUR UNE BICYCLETTE

(30) Priorität: 03.05.2019 DE 202019102496 U
(43) Veröffentlichungstag der Anmeldung: 04.11.2020
(73) Patentinhaber: tubus carrier systems GmbH, 48157 Münster (DE)
(72) Erfinder: Henne, Ralf, 40477 Düsseldorf (DE); Ronge, Peter, 48145 Münster (DE)
(74) Vertreter: Habbel, Ludwig

(56) Entgegenhaltungen:
- EP-A1- 3 351 466
- DE-A1-102011 118 867
- DE-U1-202016 008 665

## Beschreibung

Die Erfindung betrifft eine Verriegelungsanordnung nach dem Oberbegriff des Anspruchs 1.

Aus der DE 20 2015 105 902 U1 ist eine gattungsgemäße Verriegelungsanordnung bekannt. Sie weist zwei voneinander beabstandete Führungsschienen auf, die sich in einer ersten Richtung erstrecken, nämlich in der Richtung, in welcher das Zubehör auf die Auflager der ersten Komponente geschoben wird. Die erste Komponente ist als Fahrrad-Gepäckträger ausgestaltet.

In diesem Zusammenhang werden im Rahmen der vorliegenden Erfindung folgende Richtungen in Art eines rechtwinkligen Koordinatensystems genannt: "längs" bezeichnet die Richtung, vergleichbar der X-Achse Koordinatensystems, ist die Richtung, in welcher das Zubehör auf den Gepäckträger aufgeschoben oder wieder von ihm abgenommen werden kann. Diese Längsrichtung kann beispielsweise in Längsrichtung des Fahrrads verlaufen. "Hoch" bezeichnet die Richtung, die rechtwinklig zur Längsrichtung und in die Höhe verläuft, und in der sich z. B. ein federnder Riegel öffnend oder schließend bewegen lässt. Und "quer" bezeichnet die Richtung, die sowohl rechtwinklig zur Längsrichtung als auch rechtwinklig zur Hochrichtung verläuft, also zur Seite, und in welcher Querrichtung beispielsweise Anschläge oder Führungselemente das Zubehör bei einen Bewegungen, die es in Längs- und Hochrichtung ausführt, seitlich führen, wenn es auf den Gepäckträger aufgeschoben oder wieder von ihm abgenommen wird oder das Zubehör im Gebrauch gegen unerwünschte seitliche Bewegungen sichern.

Die DE202016008665U zeigt die Präambel des Anspruchs 1.

Aus der DE 20 2016 008 665 U1 ist ein Gepäckträger bekannt bei dem eine Verriegelungsanordnung eine bewegliche Klinke des Zubehörs aufweist, die ein am Fahrrad befestigtes Auflager untergreift, welches Teil eines am Fahrrad befestigten Gepäckträgers ist und als zweites Befestigungsteil bezeichnet wird. Die Klinke wirkt also in Y- oder Hochrichtung mit dem Auflager zusammen.

Die DE 10 2007 011 966 A1 und die DE 2008 044 797 B4 zeigen einerseits einen Verankerungsbaustein für ein Gepäckbehältnis auf einem Fahrrad-Gepäckträger sowie das dementsprechende Gepäckbehältnis, und andererseits eine Zubehörbefestigung an einem Gepäckträger eines Fahrrades sowie einen dementsprechenden Adapter und Gepäckträger. Dabei sind jeweils als Löcher bezeichnete Aufnahmebohrungen am Gepäckträger vorgesehen, die in Querrichtung voneinander beabstandet sind und sich in Längsrichtung erstrecken. Als Positioniermittel bezeichnete Zapfen sind am Zubehör angeordnet und werden in die Aufnahmebohrungen geführt, wenn das Zubehör am Gepäckträger montiert wird.

Der Erfindung liegt die Aufgabe zugrunde, eine gattungsgemäße Verriegelungsanordnung dahingehend zu verbessern, dass diese dem Konstrukteur eine möglichst große konstruktive Freiheit bei der Ausgestaltung der Verriegelungsanordnung ermöglicht und sowohl in optischer bzw. ästhetischer Hinsicht als auch hinsichtlich des erforderlichen Materialaufwandes eine reduzierte Ausgestaltung der ersten Komponente ermöglicht.

Diese Aufgabe wird durch eine Verriegelungsanordnung mit den Merkmalen des Anspruchs 1 gelöst. Vorteilhafte Ausgestaltungen sind in den Unteransprüchen beschrieben.

Die Erfindung schlägt mit anderen Worten vor, an der ersten Komponente eine Zentrierkontur bereitzustellen. Das Zubehör umgreift diese Zentrierkontur mit einer Halterung, die insofern ähnlich wie eine Gabel ausgestaltet ist, als sie zwei Zinken aufweist, welche der Zentrierkontur von beiden Seiten anlegen, also in Querrichtung beiderseits der Zentrierkontur anliegen. Die Zentrierkontur ist an dem Auflager mittig angeordnet. Sie stellt erstens eine Führung des Zubehörs quer zur Aufschieberichtung sicher, also zu der erwähnten ersten Richtung, und macht zweitens zwei voneinander beabstandete, äußere seitliche Führungselement überflüssig, so dass die beiden Auflager beispielsweise auch völlig unabhängig von einem Gepäckträger verwirklicht werden können, beispielsweise als Sockel, die auf einem entsprechend tragfähigen Schutzblech des Fahrrads vorgesehen sind. Da die erste Komponente der Verriegelungsanordnung mit ihren beiden Auflagern mit dem Fahrrad verbunden ist, ist sie stets am Fahrrad präsent, während das Zubehör wahlweise am Fahrrad montiert oder vom Fahrrad abgenommen werden kann. Die stets am Fahrrad verbleibende erste Komponente prägt dementsprechend das optische Erscheinungsbild des Fahrrads unveränderlich.

Dadurch dass die Zentrierkontur jeweils als Vorsprung ausgestaltet ist und nicht etwa als Einbuchtung, Ausnehmung, Bohrung oder ähnliche "Fehlstelle" im Material des Auflagers, kann das Auflager dementsprechend filigran ausgestaltet werden, da nicht etwa die erwähnte Material-"Fehlstelle" in den benachbarten Bereichen des Auflagers durch einen entsprechenden Materialeinsatz kompensiert zu werden braucht, um die erforderliche mechanische Stabilität des Auflagers zu gewährleisten. Unabhängig von dieser Kompensation, die z. B. zur Erzielung einer ausreichenden mechanischen Stabilität erforderlich sein kann, muss grundsätzlich vergleichsweise großflächig Material vorhanden sein, um darin eine "Fehlstelle" verwirklichen zu können: während eine Bohrung den die Bohrung umgebenden Rand benötigt, kann ein Vorsprung beispielsweise als Stift ausgestaltet sein, der denselben Durchmesser aufweist wie die erwähnte Bohrung, so dass er dementsprechend kleiner ausgestaltet und optisch unauffälliger ist bzw. filigraner wirkt als das damit zusammenwirkende, komplementäre Bauteil, welches den Stift aufnimmt oder umgreift. Erfindungsgemäß ist dieses komplementäre Bauteil am Zubehör vorgesehen. Es befindet sich daher nur bedarfsweise am Fahrrad und bestimmt ansonsten dessen optische Erscheinung nicht, und insbesondere ist es je nach Ausgestaltung des Zubehörs ohnehin nicht sichtbar, sondern wird von dem Zubehör optisch weitgehend verdeckt.

Vorteilhaft kann die Ausnehmung in der Halterung des Zubehörs sich beim Aufschieben auf das Auflager verjüngen. So wird ein erster, breiterer Einführungsbereich der Ausnehmung geschaffen, der in Art einer Einführungsschräge eine Vorpositionierung zwischen Zubehör und Auflager erleichtert und sicherstellt, dass sich die entsprechenden Konturbereiche Zubehörs und des Auflagers finden. Für den Benutzer bedeutet dies eine möglichst einfache und unkomplizierte Handhabung, wenn der das Zubehör auf den Auflagern anbringen möchte.

Vorteilhaft kann die Ausnehmung im Wesentlichen U-förmig oder V-förmig verlaufen. Sie weist also einerseits ein erstes, offenes Ende auf, an welchem sie zunächst die Zentrierkontur beidseitig umgreift. Beim weiteren Aufschieben des Zubehörs auf die Auflager erlangt dann ein zweites, geschlossenes Ende der Ausnehmung gegen die Zentrierkontur, so dass die Zentrierkontur nicht nur an zwei, sondern an drei Seiten von der Halterung des Zubehörs umfasst ist und das Zubehör dementsprechend am Auflager gegen Bewegungen in drei Richtungen gesichert ist. Vorteilhaft kann vorgesehen sein, dass die Zentrierkontur an einem Auflager nach unten ragt. Im Vergleich dazu, die Zentrierkontur als einen nach oben ragenden Vorsprung auszugestalten, ergibt sich erstens der Vorteil, dass der nach unten ragende Vorsprung optisch unauffällig ist.

Zweitens wird ein nach oben ragender Überstand vermieden, der beispielsweise störend sein könnte, wenn etwas anderes auf der ersten Komponente der Verriegelungsanordnung angeordnet werden soll als das Zubehör, welches die zweite Komponente der Verriegelungsanordnung bildet. Wenn beispielsweise Bücher oder eine Kiste auf einem vorschlagsgemäß ausgestalteten Gepäckträger festgebunden werden sollen - oder vorschriftswidrig eine Person auf dem Gepäckträger mitgenommen werden soll - könnten nach oben ragenden Zentrierkonturen störend empfunden werden bzw. eine kippsichere Montage der Bücher oder Kiste erschweren.

Drittens kann eine nach unten ragende Zentrierkontur als Abstandshalter dienen. Wenn, wie weiter oben bereits erwähnt, ein Auflager unabhängig von der Ausgestaltung eines Gepäckträgers auf einem entsprechend tragfähigen Schutzblech des Fahrrads angeordnet werden soll, kann die nach unten ragende Zentrierkontur als Abstandshalter sicherstellen, dass das Auflager nicht unmittelbar dem Schutzblech anliegt, sondern von der zweiten Komponente der Verriegelungsanordnung unterfasst werden kann, um diese gegen abgebende Kräfte zu sichern. Beispielsweise kann in einem solchen Fall Unterseite der Zentrierkontur in einer oder in zwei Richtungen konkav gewölbt sein, in Anpassung an die Längs- und Querwölbung des Schutzblechs.

Vorteilhaft kann der Riegel der Verriegelungsanordnung als Federlasche ausgestaltet sein, welche gegen die Federwirkung aufwärts bewegt werden kann. Seine Riegelstellung, in welcher das Zubehör am Auflager gesichert ist, nimmt ein solcher Riegel in seiner unteren Position ein, so dass nicht nur durch die Federkraft, sondern auch durch die Schwerkraft der Riegel in seine sichere Stellung, nämlich in seine Riegelstellung, gedrängt wird. In dieser Riegelstellung umgreift der Riegel das Auflager, so dass das Zubehör einerseits entgegen der Aufschieberichtung am Auflager gesichert ist und andererseits auch noch in einer zweiten Bewegungsrichtung, nämlich in einer senkrechten Bewegungsrichtung. Beispielsweise kann der Riegel das Auflager sowohl übergreifen als auch hintergreifen, während die Halterung das Auflager untergreift und die Zentrierkontur in beiden seitlichen Richtungen umgreift, so dass im Ergebnis das Zubehör in sämtlichen Bewegungsrichtungen am Auflager sicher festgelegt ist.

Die Montage eines Zubehörs, beispielsweise eines Gepäckstücks, am Fahrrad wird durch diese Ausgestaltung des Riegels erleichtert. Um den Riegel aus seiner Regelstellung gegen die Federwirkung nach oben zu bewegen, muss das Zubehör beim Aufschieben auf das Auflager lediglich nach unten gedrückt werden, so dass der Riegel dementsprechend beim Kontakt mit dem Auflager gegen die Federwirkung nach oben bewegt wird. Die entsprechende Andruckkraft des Zubehörs bereitzustellen, wird bereits durch das Eigengewicht des Zubehörs unterstützt, so dass eine leichte und einfache Handhabung des Zubehörs erreicht wird, wenn dieses am Fahrrad befestigt werden soll.

Vorteilhaft können die Auflager eine nach oben gewölbte Oberseite aufweisen, wobei die Wölbung in der erwähnten ersten Richtung, also der Aufschieberichtung, verläuft. Im Vergleich zu einer geradlinigen Oberseite wird eine optisch gefälligere Ausgestaltung erreicht, und insbesondere wird auch das Aufschieben des Zubehörs auf das Auflager erleichtert, da die Wölbung ähnlich wie eine Führungsschräge wirkt und dazu beiträgt, dass das Zubehör problemlos auf das Auflager aufgleiten kann.

Die erwähnte Wölbung kann beispielsweise dadurch verwirklicht werden, dass die Auflager jeweils einen ovalen Querschnitt aufweisen. Abgesehen von der gefälligen optischen Gestaltung wird durch den symmetrischen Querschnitt das Aufschieben des Zubehörs in beiden Richtungen gleichermaßen erleichtert. Dies kann einerseits die Montage des Auflagers am Fahrrad erleichtern, weil nämlich keine zwangsläufig vorgeschriebene Vorzugsorientierung zu beachten ist, und zweitens kann dies für den Benutzer die Handhabung seines Zubehörs erleichtern, weil dieses wahlweise in zwei Richtungen auf die erste Komponente der Verriegelungsanordnung aufgeschoben werden kann. Insbesondere wird so den Konstrukteuren von Zubehör ein großer konstruktiver Freiraum eingeräumt, da auch sie die Montage des Zubehörs wahlweise aus der einen oder aus der entgegengesetzten anderen Richtung vorsehen können. Beispielsweise wenn je nach Ausgestaltung des jeweiligen Fahrrads die Position des Sattels problematisch für die Handhabung des Zubehörs sein sollte, kann die Anordnung des Riegels und auch die Aufschieberichtung, in welcher das Zubehör montiert werden soll, an die jeweilige Problemstellung angepasst werden, um beispielsweise das Zubehör bewusst nah am Sattel oder in einem bewusst möglichst großen Abstand vom Sattel montieren zu können.

Vorteilhaft können an der Unterseite des Zubehörs, und zwar seitlich neben den mittigen Halterungen, Stützflächen angeordnet sein, die den Auflagern anliegen, wenn sich das Zubehör in seiner Riegelstellung befindet, also an den Auflagern verriegelt ist. Auf diese Weise kann eine kippstabile Lagerung des Zubehörs auf den Auflagern erreicht werden. Bei einem entsprechend breiten Auflager kann sich das Zubehör mit seinen Stützflächen beispielsweise auf der Oberseite des Auflagers abstützen. Alternativ kann jedoch vorgesehen sein, dass die Stützflächen dem Auflager seitlich Anliegen, wodurch das Zubehör ebenfalls gegen seitliche Kippbewegungen gesichert ist. Eine solch seitliche Anlage der Stützflächen unterstützt erstens die seitliche Führung des Zubehörs, so dass die Zentrierkontur dementsprechend filigran ausgestaltet werden kann, weil sie aufgrund der Wirkung der seitlichen Stützflächen nur noch in verringertem Ausmaß oder gar nicht durch Seitenkräfte belastet wird. Zweitens ermöglichen die seitlichen Stützflächen eine kippsichere Aufnahme des Zubehörs auch auf einem sehr schmal ausgestalteten Auflager.

Wenn, wie weiter oben erwähnt, die Zentrierkontur vom Auflager nach unten ragt, kann die Zentrierkontur vorteilhaft als nach unten ragender Zapfen ausgestaltet sein. Als Zapfen wird in diesem Zusammenhang bezeichnet, dass die nach unten ragende Zentrierkontur einen deutlich geringeren Querschnitt aufweist als das übrige Auflager und insofern schlanker ausgestaltet ist als eine Zentrierkontur, die man als "Sockel" unterhalb des Auflagers bezeichnen könnte. Durch die Ausgestaltung als Zapfen wird eine optisch unauffällige bzw. möglichst filigrane Formgebung der ersten Komponente der Verriegelungsanordnung unterstützt. Durch die vergleichsweise schmalen Querschnittsabmessungen des Zapfens kann auch die Halterung der zweiten Komponente der Verriegelungsanordnung, nämlich des Zubehörs, mit entsprechend geringen baulichen Abmessungen verwirklicht werden, um dennoch die Zentrierkontur gabelartig beidseitig umgreifen zu können.

Durch eine Zentrierkontur kann sich vorteilhaft eine aufrecht verlaufende Bohrung erstrecken, und zwar nicht als Sackloch, sondern als Durchgangsbohrung, so dass die Zentrierkontur von dieser aufrechten Bohrung durchsetzt ist. Auf diese Weise wird eine Befestigung der ersten Komponente des Auflagers in Art einer Verschraubung ermöglicht, wobei sich die dazu verwendete Schraube durch die erwähnte Bohrung erstrecken kann. Dementsprechend kann das Auflager völlig unabhängig vom Vorhandensein eines Gepäckträgers montiert werden, beispielsweise wie bereits erwähnt auf einem dementsprechend tragfähigen Schutzblech des Fahrrads. Es kann jedoch auch das Auflager mittels einer solchen Verschraubung an einem bereits vorhandenen Gepäckträger montiert werden, beispielsweise auf einer Traverse des Gepäckträgers, so dass der Gepäckträger dementsprechend nachgerüstet werden kann, um ein Zubehör der vorschlagsgemäßen Verriegelungsanordnung aufnehmen zu können. Eine solche, durch die Zentrierkontur hindurch erfolgende Verschraubung ist optisch unauffällig und erstens dementsprechend ästhetisch vorteilhaft sowie zweitens vandalismussicher.

Das Zubehör der vorschlagsgemäßen Verriegelungsanordnung kann vorteilhaft quer zur ersten Richtung, also quer zur Aufschieberichtung, über ein Auflager hinausragen und im Bereich des jeweiligen Überstandes einen nach unten ragenden Standfuß aufweisen. Die Standfüße ermöglichen einerseits den sicheren Stand des Zubehörs auch auf einem unebenen Untergrund, beispielsweise eines Einkaufskorbs auf einer gepflasterten Bodenfläche, und helfen, einen direkten Kontakt des erwähnten Einkaufskorbs mit einer beispielsweise regennassen Bodenfläche zu vermeiden. Außerdem können die Standfüße ggf. seitlich dem Auflager anliegen und somit als die weiter oben bereits erwähnten Stützflächen wirken, um eine besonders kippsichere Festlegung des Zubehörs auf dem Auflager zu bewirken.

Das Zubehör kann ohne weiteres für sich genommen verwendbar ausgestaltet sein, wie z.B. der vorstehend erwähnte Einkaufskorb. In diesem Fall ist der Bodenbereich des Einkaufskorbes vorschlagsgemäß so ausgestaltet, wie es für das Zubehör beschrieben ist. Alternativ jedoch kann das Zubehör auch als ein sogenannter Adapter ausgestaltet sein, der nicht allein verwendet werden soll, sondern der vielmehr seinerseits mit dem zu verwendenden Gegenstand verbunden wird, beispielsweise mit einer Kiste, einem Einkaufskorb, einer Ladeplattform oder dergleichen. Der Adapter weist Anschlussmittel auf, die eine Befestigung des Adapters an dem zu verwendenden Gegenstand ermöglichen. Bei den Anschlussmitteln kann es sich im einfachsten Fall um Bohrungen handeln, so das der Adapter mit dem zu verwendenden Gegenstand verschraubt, vernietet, vernäht oder auf ähnliche Weise verbunden werden kann. Der zu verwendende Gegenstand kann anschließend, wenn er mit dem Adapter verbunden ist, mittels des Adapters an der ersten Komponente der Verriegelungsanordnung lösbar festgelegt und sicher gehalten werden. Durch die Verwendung des Adapters können herkömmliche, nahezu beliebige Gegenstände, die nicht bereits bei ihrer Herstellung als Teil der Verriegelungsanordnung konzipiert worden sind, an den vorschlagsgemäß vorgesehenen Auflagern festgelegt werden.

Vorteilhaft können die Halterungen im Vertikalschnitt L-förmig ausgestaltet sein. Ihr aufrechter Schenkel kann als Anschlag dienen, der beim Aufschieben gegen das Auflager bzw. die Zentrierkontur gerät und die Schiebebewegung begrenzt. Ihr liegender Schenkel weist die erwähnte gabelartige Ausgestaltung mit der Ausnehmung auf, in welcher die Zentrierkontur aufgenommen wird. Wenn beispielsweise die Zentrierkontur vom Auflager nach unten ragt, unterfasst der liegende Schenkel der Halterung das Auflager und sichert so das Zubehör gegen nach oben gerichtete, abhebende Kräfte.
Ausführungsbeispiele einer vorschlagsgemäßen Verriegelung werden nachfolgend anhand der rein schematischen Darstellungen näher erläutert. Dabei zeigt
- Fig. 1: eine perspektivische Ansicht von oben auf den oberen Bereich eines Fahrrad-Gepäckträgers,
- Fig. 2: den Bereich des Gepäckträgers von Fig. 1 in einer perspektivischen Ansicht von unten,
- Fig. 3: eine Ansicht entsprechend Fig. 2, wobei neben dem Gepäckträger die Unterseite eines ersten Ausführungsbeispiels eines Zubehörs dargestellt ist, welches zusammen mit dem Gepäckträger eine Verriegelungsanordnung bildet,
- Fig. 4: die Verriegelungsanordnung von Fig. 3, wobei das Zubehör auf den Gepäckträger aufgesetzt ist,
- Fig. 5: die Verriegelungsanordnung von Fig. 4, wobei das Zubehör in einer ersten Richtung seiner Riegelstellung angenähert verschoben ist,
- Fig. 6: die Verriegelungsanordnung von Fig. 5, wobei das Zubehör bis in seine Riegelstellung geschoben ist,
- Fig. 7: die Verriegelungsanordnung von Fig. 6 in einer perspektivischen Ansicht von oben,
- Fig. 8: die Verriegelungsanordnung von Fig. 7, wobei das Zubehör entgegen der ersten Richtung in eine Riegelstellung geschoben ist,
- Fig. 9: die Verriegelungsanordnung von Fig. 7 in einer Blickrichtung entlang der ersten Richtung, und
- Fig. 10: eine perspektivische Ansicht in das Innere der Traverse eines zweiten, nämlich abschließbaren, Ausführungsbeispiels eines Zubehörs.

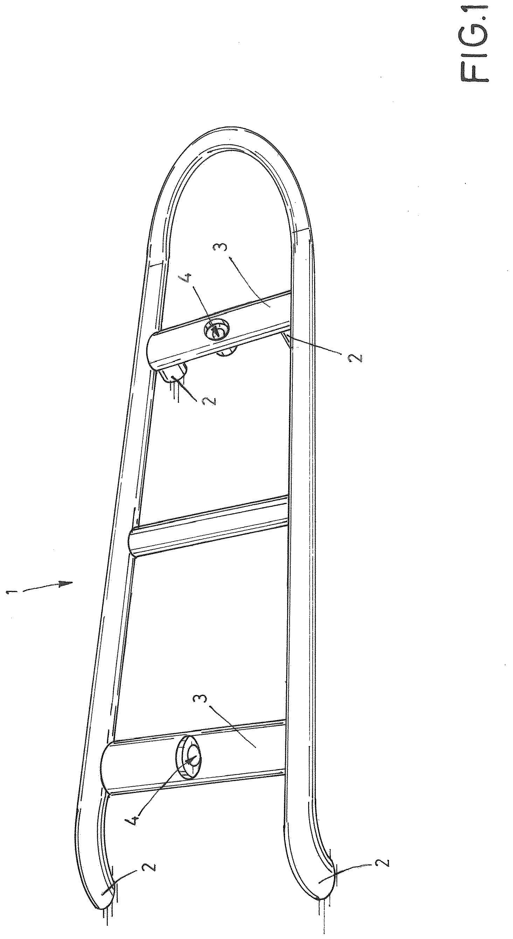

In Fig. 1 ist eine erste Komponente 1 einer Verriegelungsanordnung dargestellt, die als Gepäckträger eines Fahrrads ausgestaltet ist. Der Gepäckträger ist nur teilweise dargestellt, nämlich nur im Bereich seiner oberen Plattform. Streben 2, die von dieser oberen Plattform nach unten verlaufen, sind lediglich angedeutet. Die Plattform des Gepäckträgers weist drei Traversen auf, von denen zwei als Auflager 3 der Verriegelungsanordnung ausgestaltet sind. Die Auflager 3 weisen jeweils mittig eine Bohrung 4 auf, die das jeweilige Auflager 3 von oben nach unten durchsetzt.

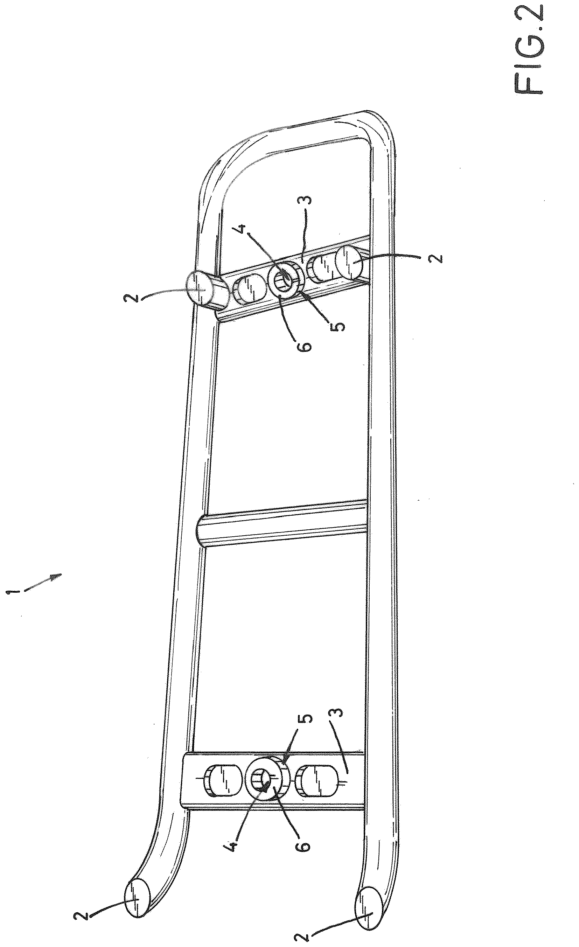

Fig. 2 zeigt die Plattform des Gepäckträgers von unten. Dabei ist ersichtlich, dass unter den Auflagern 3 mittig jeweils eine Zentrierkontur 5 vorgesehen ist, die als Zapfen 6 mit kreisrundem Querschnitt ausgestaltet ist und ebenfalls von der Bohrung 4 durchsetzt ist.

Abweichend von dem dargestellten Ausführungsbeispiel kann vorgesehen sein, derartige oder ähnlich ausgestaltete Auflager 3 unabhängig von einem Gepäckträger an einem Fahrrad anzuordnen, beispielsweise indem die Auflager 3 auf einem entsprechend tragfähig ausgestalteten Schutzblech eines Laufrades des Fahrrads montiert sind. Zur Befestigung dienende Schrauben können sich durch die Bohrungen 4 erstrecken. Eine optisch besonders unauffällige Montage der Auflager 3 kann dadurch erreicht werden, dass abweichend von dem dargestellten Ausführungsbeispiel die Bohrungen 4 nicht als Durchgangsbohrungen ausgestaltet sind, sondern beispielsweise nur unten in den Zapfen 6 münden. In diesem Fall kann die Montage mit einer verdeckten, von unten in den Zapfen 6 ragenden, Schraube erfolgen, während die Oberseite des Auflagers 3 unterbrechungsfrei ausgestaltet ist.

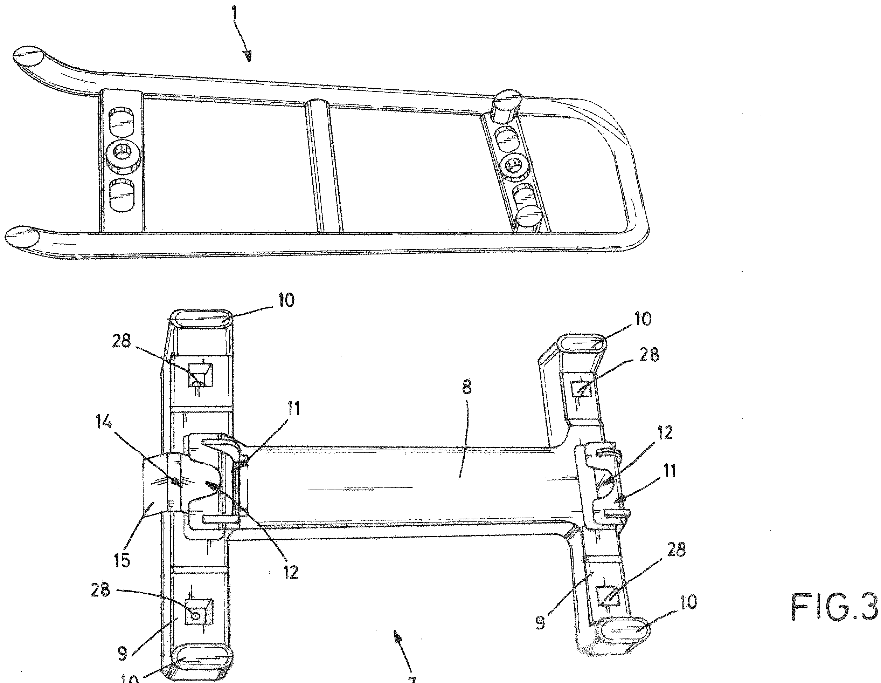

Fig. 3 zeigt, ebenfalls in einer Ansicht von unten, neben der ersten Komponente 1 eine zweite, als Zubehör 7 bezeichnete Komponente der Verriegelungsanordnung. Bei dem dargestellten Ausführungsbeispiel ist das Zubehör 7 als Adapter ausgestaltet welches beispielsweise unter Taschen, Körben oder dergleichen montiert werden kann und auf diese Weise die Befestigung der Taschen, Körbe oder dergleichen an dem Gepäckträger ermöglicht. Abweichend von dem dargestellten Ausführungsbeispiel kann die zweite Komponente als integraler Bestandteil eines Zubehörs ausgestaltet sein, indem sie z. B. die Bodengruppe eines solchen Zubehörs bildet.

Das Zubehör 7 weist eine Längsrippe 8 und zwei Traversen 9 auf. An den äußeren Enden der Traversen 9 sind Standfüße 10 angeformt, die sich weiter nach unten erstrecken als die übrigen Bestandteile des Zubehörs 7. Die in Fig. 3 rechts dargestellte Traverse 9 weist eine unbeweglich ausgestaltete Halterung 11 auf, die im Querschnitt L-förmig ausgestaltet ist, indem sie sich nach unten und in einer ersten Richtung erstreckt. Der untere, liegend ausgestaltete Abschnitt der Halterung 11 ist gabelartig ausgestaltet und verläuft beidseitig einer Ausnehmung 12. Die in Fig. 3 links dargestellte Traverse 9 weist eine gleichartige Halterung 11 auf.

Weiterhin weist das Zubehör 7 im Bereich dieser links dargestellten Traverse 9 einen Riegel 14 auf, der durch Federkraft in seine aus Fig. 3 ersichtliche untere Stellung gedrängt ist, und der an seinem sogenannten vorderen Ende eine Schrägfläche 15 aufweist, die sich in der genannten ersten Richtung und nach oben zu einem freien Ende des Riegels 14 erstreckt.

Aus Fig. 3 ist schließlich auch noch ersichtlich, dass das als Adapter ausgestaltete Zubehör 7 Anschlussmittel aufweist, die zur Befestigung des Adapters an einem Gegenstand wie dem oben erwähnten Korb bzw. der Tasche dienen. Hierzu sind in den Traversen 9 Vertiefungen vorgesehen, die als Befestigungsmulden 28 bezeichnet sind und zur Aufnahme von Schraubenköpfen, Muttern, Nietköpfen oder dergleichen dienen. Durch eine Bohrung, die jeweils im Grund einer Befestigungsmulde 28 vorgesehen ist, kann sich der Schaft des jeweiligen Befestigungselements, z.B. eine Schraube, ein Niet oder dergleichen erstrecken, so dass das Zubehör 7 beispielsweise als Bodengruppe einer Tasche, eines Korbes oder dergleichen dienen kann und fest mit der betreffenden Tasche, dem Korb oder dergleichen verbunden sein kann.

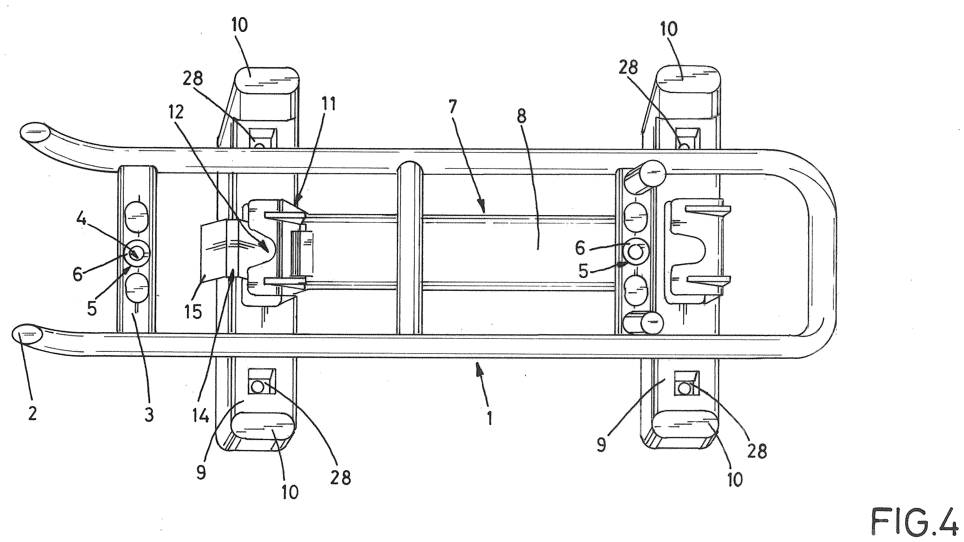

Fig. 4 zeigt das auf den Gepäckträger aufgesetzte Zubehör 7. Das Zubehör 7 ist derart ausgerichtet, dass sich die Halterungen 11 in einer Linie mit den Zentrierkonturen 5 der Auflager 3 befinden, so dass das Zubehör nun dadurch in eine Riegelstellung gebracht werden kann, dass es in der genannten ersten Richtung geschoben wird. Die Schrägfläche 15 des Riegels 14 steht kurz vor einem Kontakt mit dem links dargestellten Auflager 3.

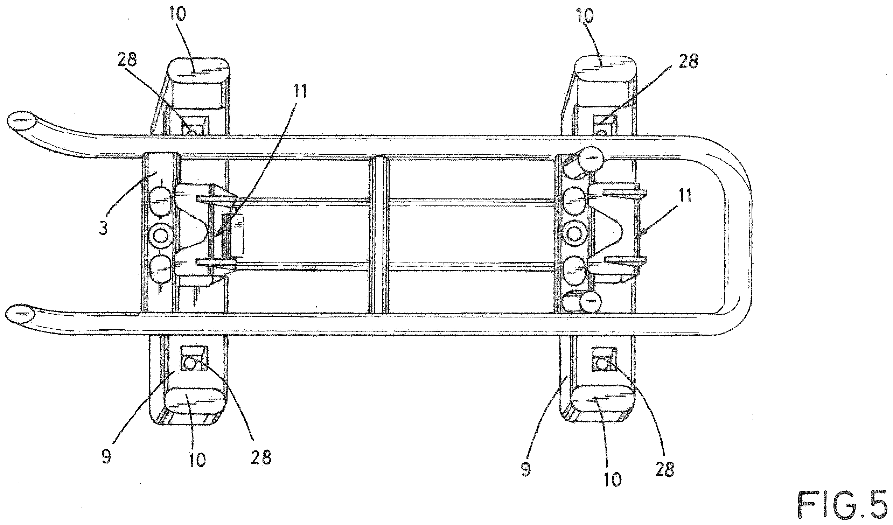

Fig. 5 zeigt das in der ersten Richtung weiter geschobene Zubehör 7, welches sich seiner Riegelstellung weiter angenähert hat. Die Halterungen 11 untergreifen jeweils bereits ein Auflager 3. Die Schrägfläche 15 des Riegels 14 ist bereits mit dem links dargestellten Auflager 13 in Kontakt gekommen, und durch die weitere Schiebebewegung ist der Riegel 14 gegen die Federwirkung nach oben bewegt worden und liegt nun dem Auflager 3 von oben an.

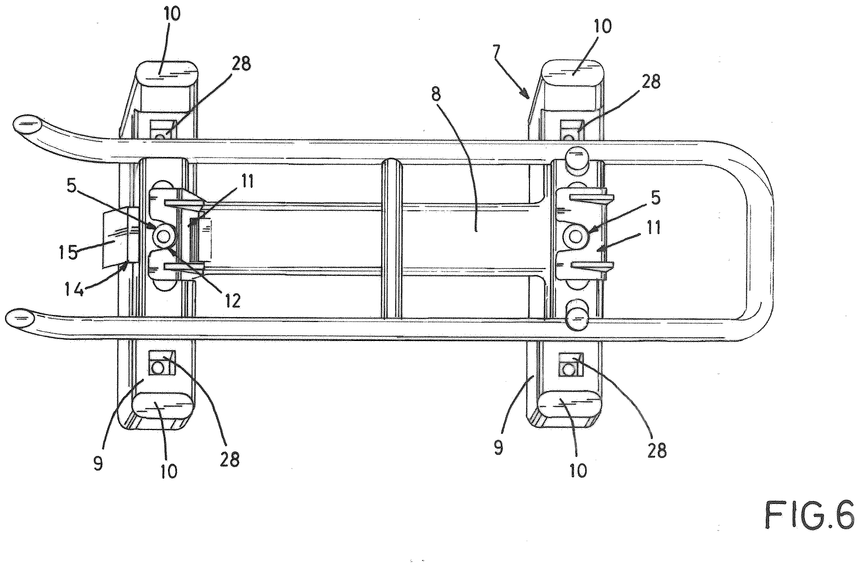

Fig. 6 zeigt das Zubehör 7 in seiner Riegelstellung. Die Halterungen 11 umgreifen nun jeweils eine Zentrierkontur 5 beidseitig, indem jeweils die Zentrierkontur 5 in der Ausnehmung 12 der betreffenden Halterung 11 aufgenommen ist. Zusätzlich zu den Halterungen 11 wirken auch die Längsrippe 8 und die Traversen 9 als Anschläge, welche die Beweglichkeit des Zubehörs 7 gegenüber der ersten Komponente 1 beschränken, so dass das Zubehör 7 nun in sämtlichen Bewegungsrichtungen außer entgegen der bisherigen Schieberichtung, der sogenannten ersten Richtung, festgelegt ist.

Der Riegel 14 hat, wenn sich das Zubehör 7 in der Riegelstellung gemäß Fig. 6 befindet, das zugehörige Auflager 3 übergriffen und sich aufgrund der Federwirkung wieder abgesenkt, so das der Riegel 14, wie aus Fig. 6 ersichtlich, dass Zubehör 7 an der ersten Komponente 1 auch gegen Bewegungen sichert, die das Zubehör 7 entgegen der ersten Richtung auszuführen bestrebt sein könnte. Das Zubehör 7 ist daher in seiner in Fig. 6 dargestellten Riegelstellung gegen sämtliche Relativbewegungen zur ersten Komponente 1 gesichert und dementsprechend sicher an dem Fahrrad-Gepäckträger festgelegt.

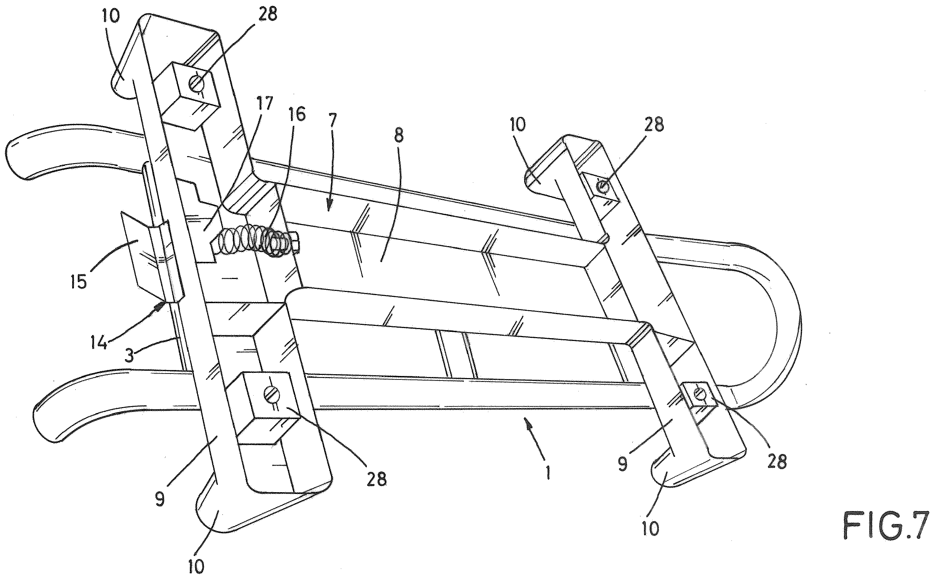

Fig. 7 zeigt die Anordnung von Fig. 6 aus einer perspektivischen Ansicht von oben. Dabei ist eine Feder 16 ersichtlich, die den Riegel 14 nach unten drängt. Weiterhin ist ersichtlich, dass sich an die Schrägfläche 15 eine steil nach oben verlaufende Haltefläche 17 des Riegels 14 anschließt. Mit dieser Haltefläche 17 liegt der Regel 14 dem zugeordneten Auflager 3 an.

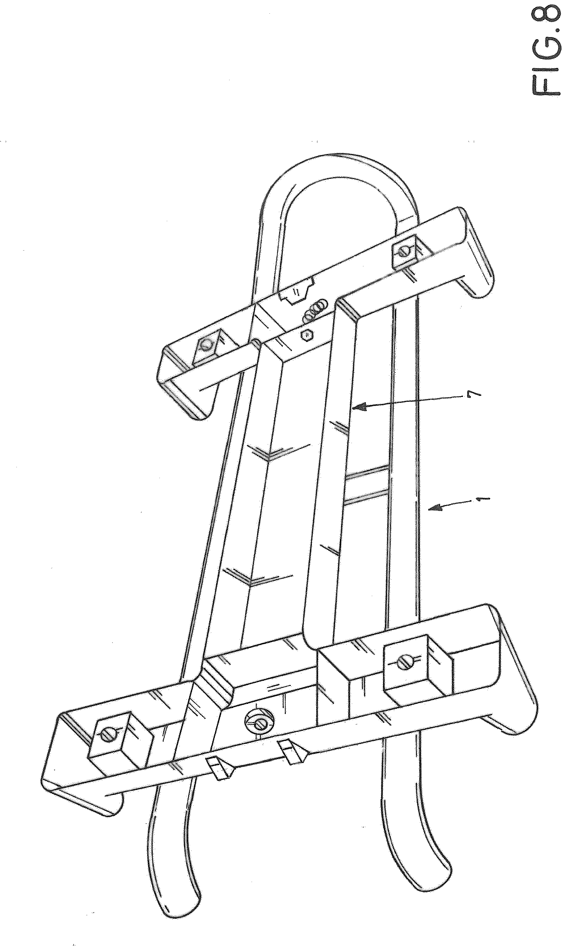

Fig. 8 zeigt eine Anordnung ähnlich Fig. 7, wobei jedoch das Zubehör 7 in umgekehrter Schieberichtung, also entgegen der ersten Richtung der Fig. 1 bis 7, in seine Riegelstellung geschoben worden ist. Bei dem dargestellten Ausführungsbeispiel kann das Zubehör 7 wahlweise aus beiden Richtungen auf die Plattform des Gepäckträgers aufgeschoben werden und in seine Riegelstellung geführt werden.

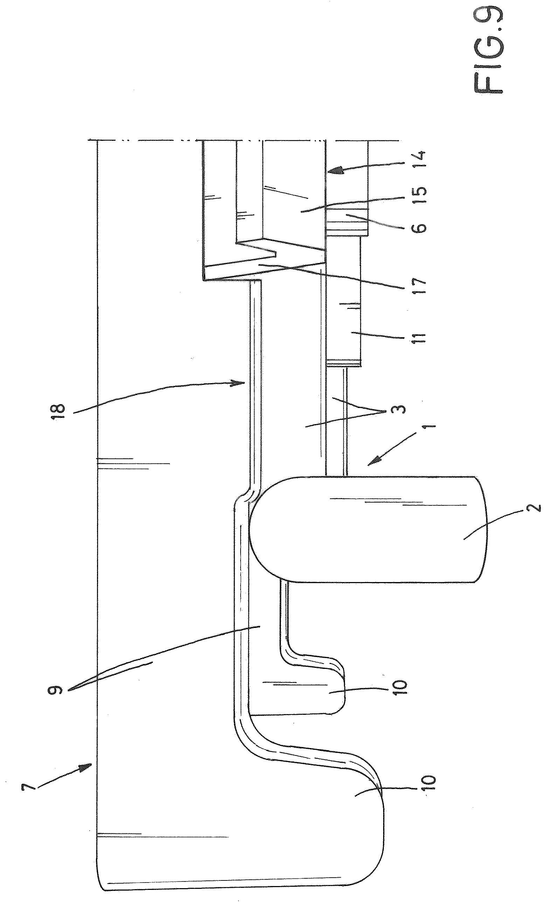

Fig. 9 zeigt eine Ansicht in Längsrichtung der Plattform des Gepäckträgers, und zwar entgegen der ersten Richtung, in welcher das Zubehör 7 auf die erste Komponente 1 aufgeschoben worden ist. Dabei ist ersichtlich, dass die Traversen 9 nicht auf den in Längsrichtung der Plattform verlaufenden Rohren bzw. Streben des Gepäckträgers aufliegen. Vielmehr bilden die Traversen 9 an ihrer Unterseite seitlich neben den Halterungen 11 Stützflächen 18 aus, mit denen sie auf den Auflagern 3 aufruhen.

Dadurch wird einerseits eine breite, kippsichere Abstützung des Zubehörs 7 auf der ersten Komponente 1 gewährleistet, andererseits ist die dargestellte Verriegelungsanordnung nicht darauf angewiesen, dass die erste Komponente 1 als Gepäckträger ausgestaltet sein muss. Vielmehr können die Auflager 3 auch unabhängig von einem einen Gepäckträger bildenden Gestänge an einem Fahrrad angeordnet sein. Beispielsweise können die Auflager mithilfe der Bohrungen 4 auf einem geeigneten Untergrund montiert sein wie z.B. auf einem Laufrad-Schutzblech des Fahrrades. Die Höhe der Zapfen 6 stellt dabei einen ausreichenden Freiraum unterhalb der Auflager 3 sicher, so dass die Halterungen 11 sich unter die Auflager 3 erstrecken und die jeweilige Zentrierkontur 5 umgreifen können.

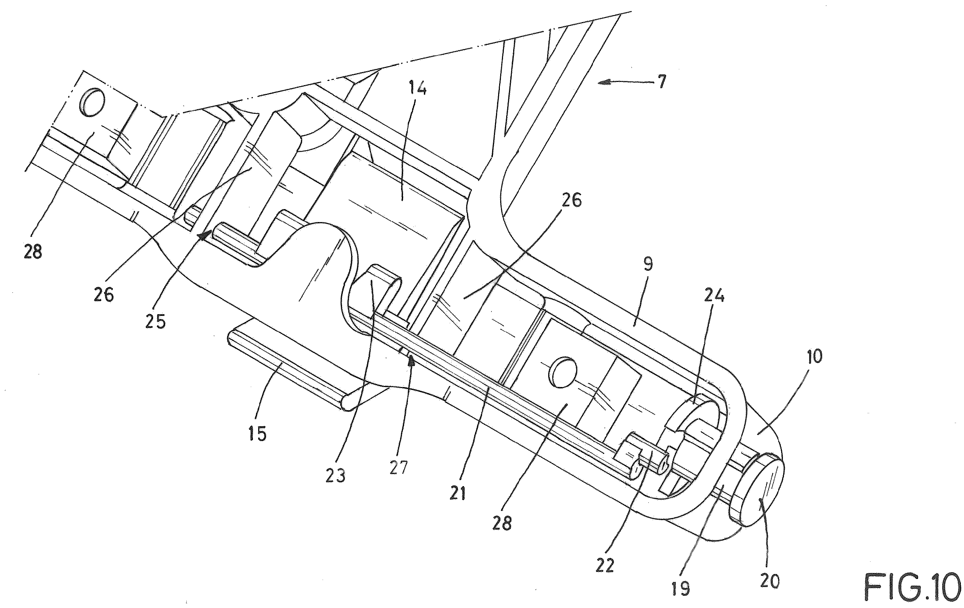

Fig. 10 zeigt einen Ausschnitt eines zweiten Ausführungsbeispiels eines Zubehörs 7, welches weitestgehend baugleich mit dem ersten, bisher beschriebenen Ausführungsbeispiel ist und daher mit demselben Bezugszeichen gekennzeichnet ist. Dabei zeigt Fig. 10 in einer perspektivischen Ansicht von oben, ähnlich Fig. 7, insbesondere den Bereich der mit dem Riegel 14 versehenen Traverse 9.

Bei dem Ausführungsbeispiel der Fig. 10 kann der Riegel 14 gegen unbefugte Benutzung gesichert werden, denn das Zubehör 7 ist abschließbar ausgestaltet. Zu diesem Zweck ist an einem Ende der Traverse 9 oberhalb des dortigen Standfußes 10 ein Schloss 19 in der Traverse 9 angeordnet. Rein beispielhaft ist vor dem von außen zugänglichen Ende des Schlosses 19 ein Verschlussstopfen 20 dargestellt. In einer Ausgestaltung kann dieser Verschlussstopfen 20 als Teil der Traverse 9 bzw. des Standfußes 10 hergestellt sein und von einer Schwächungslinie umgeben sein. Soll das Zubehör 7 abschließbar ausgerüstet werden, kann der Verschlussstopfen 20 werkzeuglos herausgebrochen werden und der Schließmechanismus einschließlich des Schlosses 19 eingesetzt werden. Alternativ kann in einer zweiten Ausgestaltung der Verschlussstopfen 20 als separates Bauteil ausgestaltet sein, beispielsweise aus einem weichen, gummiartigen Elastomer-Werkstoff, so dass er wahlweise eingesetzt oder entfernt werden kann, beispielsweise um auch als Feuchtigkeits-Spritzschutz für das Schloss 19 zu dienen.

Das Schloss 19 wirkt auf eine Exzenterwelle 21 ein, die einen ersten, vergleichsweise kleineren Schloss-Exzenter 22 aufweist sowie einen zweiten, vergleichsweise größeren Riegel-Exzenter 23. Bei einer Drehbewegung des Schlosses 19 wirkt dieses über einen Betätigungsflansch 24 auf den Schloss-Exzenter 22 und bewirkt dadurch eine Schwenkbewegung der Exzenterwelle 21 um deren Längsachse. Dieser Schwenkbewegung folgend gerät der Riegel-Exzenter 23 aus seiner dargestellten, angehobenen, etwa liegend verlaufenden Freigabestellung in eine nach unten hängende, abgesenkte Sperrstellung, in welcher er dem Riegel 14 von oben anliegt oder zumindest dessen Beweglichkeit nach oben begrenzt und jedenfalls verhindert, dass der Riegel 14 aus seiner Riegelstellung ausreichend weit angehoben werden kann, um das Zubehör 7 von der ersten Komponente 1 der Verriegelungsanordnung trennen zu können.

Jenseits des Riegel-Exzenters 23 ist die Exzenterwelle 21 in einer Lagerbohrung 25 einer Zwischenwand 26 gelagert, während sie diesseits des Riegel-Exzenters 23, also zum Schloss 19 hin, in einer nach oben offenen Lagermulde 27 einer Zwischenwand 26 gelagert ist. Auch zwischen der dem Schloss 19 nahen Befestigungsmulde 28, die sich wie ein Sockel in das Innere der Traverse 9 hinein erstreckt, und der Außenwand der Traverse 9 ist eine Mulde angeordnet, die ähnlich wie die Lagermulde 27 zur Lagerung der Exzenterwelle 21 dient.

Die Möglichkeit, das Zubehör durch eine Blockade seines Riegels abschließen zu können, kann auch bei einer anderen als der vorschlagsgemäßen Ausgestaltung der Verriegelungsanordnung vorteilhaft vorgesehen sein, also erstens auch dann, wenn die erste Komponente nicht notwendigerweise einen zentralen Sockel aufweist, und zweitens auch dann, wenn das Schloss und der damit verbundene Schließmechanismus anders ausgestaltet sind als das dargestellte Ausführungsbeispiel mit dem Schloss 19 und der Exzenterwelle 21.

### Bezugszeichen:

- 1: Erste Komponente
- 2: Strebe
- 3: Auflager
- 4: Bohrung
- 5: Zentrierkontur
- 6: Zapfen
- 7: Zubehör
- 8: Längsrippe
- 9: Traverse
- 10: Standfuß
- 11: Halterung
- 12: Ausnehmung
- 14: Riegel
- 15: Schrägfläche
- 16: Feder
- 17: Haltefläche
- 18: Stützfläche
- 19: Schloss
- 20: Verschlussstopfen
- 21: Exzenterwelle
- 22: Schloss-Exzenter
- 23: Riegel-Exzenter
- 24: Betätigungsflansch
- 25: Lagerbohrung
- 26: Zwischenwand
- 27: Lagermulde
- 28: Befestigungsmulde

## Patentansprüche

1. Verriegelungsanordnung zur Verriegelung eines Zubehörs (7) an einem Fahrrad,
mit einer ersten, an dem Fahrrad befestigbaren Komponente (1), die zwei Auflager (3) aufweist, welche in einer ersten, längs verlaufenden Richtung voneinander beabstandet angeordnet sind,
und mit einer zweiten, als Zubehör (7) bezeichneten Komponente,
die wahlweise mit der ersten Komponente (1) verbindbar oder von dieser lösbar ist,
und die einen Riegel (14) aufweist, welcher quer zur ersten Richtung in einer als Hochrichtung bezeichneten Richtung beweglich ist,
wobei das Zubehör (7) in der ersten Richtung auf die beiden Auflager (3) aufschiebbar ist bis in eine Riegelstellung, in welcher der Riegel (14) eine Haltekontur der ersten Komponente (1) hintergreift, derart, dass das Zubehör (7) gegen eine Bewegung entgegen der ersten Richtung gesichert ist,
und wobei das Zubehör (7) Anschläge aufweist, welche an Haltekonturen der ersten Komponente (1) anliegen, wenn sich das Zubehör (7) in der Riegelstellung befindet, derart,
dass das Zubehör (7) in sämtlichen anderen Bewegungsrichtungen mit Ausnahme der Bewegung entgegen der ersten Richtung an der ersten Komponente (1) festgelegt ist,
**dadurch gekennzeichnet,**
**dass** die beiden Auflager (3) jeweils eine mittige, als Vorsprung ausgestaltete Zentrierkontur (5) aufweisen und Halterungen (11) des Zubehörs gabelartig diese Zentrierkontur (5) quer zur Längsrichtung auf beiden Seiten umgreifen, wenn sich das Zubehör (7) in seiner Riegelstellung befindet,
derart, dass jeweils die Zentrierkontur (5) in einer Ausnehmung (12) der Halterung (11) aufgenommen ist.

2. Verriegelungsanordnung nach Anspruch 1,
**dadurch gekennzeichnet,**
**dass** die Ausnehmung (12) innerhalb der Halterung (11) konisch verläuft von einem ersten, breiteren Einführungsende zu einem zweiten, schmaleren Bereich.

3. Verriegelungsanordnung nach Anspruch 1 oder 2,
**dadurch gekennzeichnet,**
**dass** die Ausnehmung (12) im Wesentlichen U-förmig oder V-förmig verläuft.

4. Verriegelungsanordnung nach einem der vorhergehenden Ansprüche,
**dadurch gekennzeichnet,**
**dass** die Zentrierkontur (5) an einem der Auflager (3) nach unten ragt.

5. Verriegelungsanordnung nach einem der vorhergehenden Ansprüche,
**dadurch gekennzeichnet,**
**dass** der Riegel (14) als Federlasche ausgestaltet ist, die gegen die Federwirkung aufwärts beweglich ist und in der Riegelstellung eines der Auflager (3) umgreift.

6. Verriegelungsanordnung nach einem der vorhergehenden Ansprüche,
**dadurch gekennzeichnet,**
**dass** die Auflager (3) eine nach oben gewölbte Oberseite aufweisen, derart, dass in der ersten Richtung die Höhe der Auflager zu- und wieder abnimmt.

7. Verriegelungsanordnung nach Anspruch 6,
**dadurch gekennzeichnet,**
**dass** die Auflager (3) einen ovalen Querschnitt aufweisen.

8. Verriegelungsanordnung nach einem der vorhergehenden Ansprüche,
**dadurch gekennzeichnet,**
**dass** an der Unterseite des Zubehörs (7) seitlich neben den mittigen Halterungen (11) Stützflächen (18) angeordnet sind, die den Auflagern (3) anliegen, wenn sich das Zubehör (7) in seiner Riegelstellung befindet.

9. Verriegelungsanordnung nach Anspruch 4,
**dadurch gekennzeichnet,**
**dass** eine mittige Zentrierkontur (5) eines der Auflager (3) als nach unten ragender Zapfen (6) ausgestaltet ist.

10. Verriegelungsanordnung nach einem der vorhergehenden Ansprüche,
**dadurch gekennzeichnet,**
**dass** eine mittige Zentrierkontur (5) eines der Aufleger (3) von einer aufrechten Bohrung (4) durchsetzt ist.

11. Verriegelungsanordnung nach einem der vorhergehenden Ansprüche,
**dadurch gekennzeichnet,**
**dass** das Zubehör (7) quer zur ersten Richtung über die Auflager hinausragt und nach unten ragende Standfüße (10) aufweist.

12. Verriegelungsanordnung nach einem der vorhergehenden Ansprüche,
**dadurch gekennzeichnet,**
**dass** das Zubehör (7) als Adapter ausgestaltet ist und seinerseits Anschlussmittel aufweist zur Befestigung an einem auf den Auflagern (3) zu haltenden Gegenstand.

13. Verriegelungsanordnung nach einem der vorhergehenden Ansprüche,
**dadurch gekennzeichnet,**
**dass** die Halterungen (11) im Vertikalschnitt L-förmig ausgestaltet sind, derart, dass sie die Auflager (3) sowohl in aufrechter als auch in liegender Richtung hinter- und untergreifen.

## Claims

1. Locking element for locking an accessory (7) to a bicycle which locking element has a first assembly (1) that can be fastened to a bicycle and that incorporates two support members (3) that are disposed a distance apart from each other in a first, longitudinally oriented direction
and which locking element has a second assembly referred to as "accessory" (7) that can be optionally connected to or disconnected from the first assembly (1) and that incorporates a locking member (14) that can be moved at right angles to the first direction in a direction that is referred as a vertical direction,
where the accessory (7) can be pushed in the first direction onto the two support members (3) as far as a locking position in which the locking member (14) engages behind a retaining contour on the first assembly (1) in such a way that the accessory (7) is secured against movement opposite to the first direction
and where the accessory (7) incorporates stops that, when the accessory (7) is in the locking position, lie against retaining contours on the first assembly (1) in such a way that the accessory (7) is fixed on the first assembly (1) in all directions of movement except movement opposite to the first direction, **characterised in that**
each of the two support members (3) incorporates a centrally positioned centring guide (5) constructed as a protruding portion and **in that**, when the accessory (7) is in its locking position, retaining members (11) on the accessory engage with this centring guide (5) forkwise from both sides at right angles to the longitudinal direction in such a way that each centring guide (5) fits into a recess (12) in the retaining member (11).

2. Locking element in accordance with claim 1, **characterised in that** that the recess (12) inside the retaining members (11) tapers from a first, wider insertion end down to a second, narrower portion.

3. Locking element in accordance with claim 1 or 2, **characterised in that** the recess (12) is essentially U-shaped or V-shaped.

4. Locking element in accordance with any one of the foregoing claims, **characterised in that** the centring guide (5) on one of the support members (3) projects downwards.

5. Locking element in accordance with any one of the foregoing claims, **characterised in that** the locking member (14) is constructed as a spring plate that can be moved upwards against spring pressure and in the locking position engages around one of the support members (3).

6. Locking element in accordance with any one of the foregoing claims, **characterised in that** the support members (3) incorporate an upward curving upper side in such a way that in the first direction the height of the support members increases and decreases.

7. Locking element in accordance with claim 6, **characterised in that** the support members (3) incorporate an oval cross-section.

8. Locking element in accordance with any one of the foregoing claims, **characterised in that** on the underside of the accessory (7) support surfaces (18) that lie against the support members (3) when the accessory (7) is in its locking position are disposed at the side of the centrally positioned retaining members (11).

9. Locking element in accordance with claim 4, **characterised in that** a centrally positioned centring guide (5) on one of the support members (3) is constructed as a downward projecting stud (6).

10. Locking element in accordance with any one of the foregoing claims, **characterised in that** a centrally positioned centring guide (5) on one of the support members (3) has a vertical hole (4) drilled through it.

11. Locking element in accordance with any one of the foregoing claims, **characterised in that** the accessory (7) projects out beyond the support members at right angles to the first direction and incorporates downward projecting support feet (10).

12. Locking element in accordance with any one of the foregoing claims, **characterised in that** the accessory (7) is constructed as an adapter and in turn incorporates attaching means for fastening to an object to be retained on the support members (3).

13. Locking element in accordance with any one of the foregoing claims, **characterised in that** the retaining members (11) are constructed with an L-shaped vertical cross-section in such a way that they engage behind and under the support members (3) in a vertical and a horizontal direction.

## Revendications

1. Dispositif de verrouillage permettant de verrouiller un accessoire (7) sur une bicyclette,
comprenant une première composante (1), pouvant être fixée contre la bicyclette, composante qui présente deux paliers d'appui (3) disposés à distance l'un de l'autre dans une premier direction longitudinale,
et comprenant une deuxième composante appelée accessoire (7),
composante qui au choix peut être reliée à la première composante (1) ou en être détachée,
et qui présente un verrou (14) déplaçable transversalement à la première direction, dans une direction appelée direction verticale,
sachant que l'accessoire (7) est, dans la première direction, enfilable sur les deux paliers d'appui (3) jusque sur une position de verrouillage sur laquelle le verrou (14) passe par derrière un contour de retenue de la première composante (1), de sorte que l'accessoire (7) est sécurisé contre un mouvement opposé à la première direction,
et sachant que l'accessoire (7) présente des butées qui appliquent contre des contours de retenue de la première composante (1) lorsque l'accessoire (7) se trouve en position verrouillée, de sorte que l'accessoire (7) est immobilisé contre la première composante (1) dans toutes les autres directions de mouvement - à l'exception du mouvement opposé à la première direction -, **caractérisé en ce que** les deux paliers d'appui (3) présentent respectivement un contour de centrage (5) configuré en saillie et que des fixations (11) de l'accessoire entourent comme une fourche, des deux côtés, ce contour de centrage (5) transversalement à la direction longitudinale lorsque l'accessoire (7) se trouve sur sa position de verrouillage,
de sorte que respectivement le contour de centrage (5) est reçu dans un évidement (12) de la fixation (11).

2. Dispositif de verrouillage selon la revendication 1, **caractérisé en ce que** l'évidement (12) à l'intérieur de la fixation (11) présente un tracé conique allant d'une première extrémité d'introduction plus large vers une seconde zone plus étroite.

3. Dispositif de verrouillage selon la revendication 1 ou 2, **caractérisé en ce**
**que** l'évidement (12) présente un tracé essentiellement en U ou en V.

4. Dispositif de verrouillage selon l'une des revendications précédentes, **caractérisé en ce**
**que** le contour de centrage (5) contre l'un des paliers d'appui (3) fait saillie vers le bas.

5. Dispositif de verrouillage selon l'une des revendications précédentes, **caractérisé en ce**
**que** le verrou (14) est configuré comme une patte ressort déplaçable vers le haut en vainquant l'effet ressort, et qui en position de verrouillage entoure l'un des paliers d'appui (3).

6. Dispositif de verrouillage selon l'une des revendications précédentes, **caractérisé en ce**
**que** les paliers d'appui (3) présentent un côté supérieur incurvé vers le haut de sorte que dans une première direction la hauteur des paliers d'appui augmente puis diminue à nouveau.

7. Dispositif de verrouillage selon la revendication 6, **caractérisé en ce**
**que** les paliers d'appui (3) présentent une section ovale.

8. Dispositif de verrouillage selon l'une des revendications précédentes, **caractérisé en ce**
**que** contre le côté inférieur de l'accessoire (7), latéralement à côté des fixations (11) centrées, sont disposées des surfaces d'appui (18) qui appuient contre les paliers d'appui (3) lorsque l'accessoire (7) se trouve sur sa position de verrouillage.

9. Dispositif de verrouillage selon la revendication 4, **caractérisé en ce**
**qu'**un contour de centrage (5) médian de l'un des paliers d'appui (3) est configuré comme tenon (6) faisant saillie vers le bas.

10. Dispositif de verrouillage selon l'une des revendications précédentes, **caractérisé en ce**
**qu'**un contour de centrage (5) médian de l'un des paliers d'appui (3) est traversé par un alésage vertical (4).

11. Dispositif de verrouillage selon l'une des revendications précédentes, **caractérisé en ce**
**que** l'accessoire (7) fait saillie au-dessus des paliers d'appui transversalement à la première direction et qu'il présente des pieds (10) faisant saillie vers le bas.

12. Dispositif de verrouillage selon l'une des revendications précédentes, **caractérisé en ce**
**que** l'accessoire (7) est configuré comme adaptateur et qu'il présente de son côté des moyens de raccordement pour la fixation contre un objet devant être retenu sur les paliers d'appui (3).

13. Dispositif de verrouillage selon l'une des revendications précédentes, **caractérisé en ce**
**que** les fixations (11) observées en coupe verticale sont configurées en L de sorte qu'elles passent par derrière et par-dessous les paliers d'appui (3) aussi bien en direction verticale qu'horizontale.
